# EUROPEAN PATENT APPLICATION

(11) **EP 1 496 070 A1**
(43) Date of publication of application: **12.01.2005**
(21) Application number: 03102060.5
(22) Date of filing: 09.07.2003
(51) Int. Cl.: C08F 290/04, C08F 255/02, C08F 10/06

(54) **A polyolefin having internal double bonds and a method for making the same**

(71) Applicant: TOTAL PETROCHEMICALS RESEARCH FELUY, 7181 Seneffe (Feluy) (BE)
(72) Inventor: Razavi, Abbas, B-7000, Mons (BE); Busico, Vincenzo, I-80126, Napoli (IT); Cipullo, Roberta, I-80131, Napoli (IT); Cutillo, Francesco, I-80121, Napoli (IT)

(57) **Abstract**

The invention provides a method for the production of a non - linear polyolefin, which method comprises:
(a) providing a polyolefin having a ratio of internal to terminal double bonds of at least 1:1 and;
(b) forming a non-linear polyolefin from the polyolefin provided in step (a).

## Description

The present invention concerns a method for producing linear polyolefins having internal double bonds. The invention is especially effective when applied to polypropylene and polyethylene. The invention also relates to a method for producing non-linear polyolefins and functionalised polyolefins, particularly polypropylenes and polyethylenes, from the linear polyolefins having internal double bonds. Further, the invention relates to polyolefins, particularly polypropylenes and polyethylenes produced using the methods of the invention and to uses thereof.

Polyolefin resin such as polypropylene resin is used in a variety of different applications. However, polypropylene resin suffers from the problem of having a low melt strength, which restricts the use of polypropylene in a number of applications because the polypropylene is difficult to process. It is known in the art to increase the melt strength of polypropylene, for example by irradiating the polypropylene with an electron beam. It is known that electron beam irradiation significantly modifies the structure of a polypropylene molecule. The irradiation of polypropylene results in chain scission and grafting (or branching), whi ch can occur simultaneously. Up to a certain level of irradiation dose, it is possible to produce from a linear polypropylene molecule having been produced using a Ziegler - Natta catalyst, a modified non-linear polymer molecule having free-end long branches, otherwise known as long chain branching (LCB). However, the properties are not significantly improved.

It is desirable also to produce cross -linked polyolefins from linear polyolefins because of their desirable properties such as increased durability and adaptability. For example, US-A-5554668 discloses a process for irradiating polypropylene to increase the melt strength thereof. An increase in the melt strength is achieved by decreasing the melt flow rate, otherwise known as the melt index.

It is known to make cross-linked polymers from linear polymers using an agent to create radicals. Radicals in different polymer chains then combine to form a 'bridge' or 'cross - link'. Suitable agents include peroxide or ionising radiation, such as gamma radiation.

EP-A-0520773 discloses an expandable polyolefin resin composition including polypropylene optionally blended with polyethylene. In order to prepare a cross -linked foam, a sheet of expandable resin composition is irradiated with ionising radiation to cross-link the resin. The ionising radiation may include electron rays, at a dose of from 1 to 20 Mrad. It is disclosed that auxiliary cross -linking agents may be employed which include a bifunctional monomer, exemplified by 1,9-nonanediol dimethylacrylate.

US-A-2948666 and US-A-5605936 disclose processes for producing irradiated polypropylene. The latter specification discloses the production of a high molecular weight, non -linear propylene polymer material characterised by high melt strength by high-energy irradiation of a high molecular weight linear propylene polymer. It is disclosed that the ionising radiation for use in the irradiation step may comprise electrons beamed from an electron generator having an accelerating potential of 500 to 4000 kV. For a propylene polymer material without a polymerised diene content, the dose of ionising radiation is from 0.5 to 7 Mrad. For propylene polymer material having a polymerised diene content, the dose is from 0.2 to 2 Mrad.

WO 00/56793 and WO 00/56794 describe the production of polypropylene having long chain branches by irradiating propylene with an electron beam. The beam has an energy of at least 5 Mev. Irradiation is carried out in the presence of a grafting agent.

A particular class of cross-linked polyolefins are vulcanised polyolefins. Vulcanisation, by reaction with sulphur or other suitable agent under intense heat, leads to sulphur atoms forming cross-links between polymer chains. This, in turn, leads to an increase in cross-linking between the polyolefin chains and to advantageous changes in physical properties.

In view of the above, it will be appreciated that methods of making non-linear polymers are not entirely satisfactory. Specifically, it will be appreciated that the high-energy irradiation used in many methods amounts to very harsh processing conditions. Further, in the prior known methods using these very harsh conditions, reticulation or vulcanisation is uncontrolled and leads to a product having a large molecular weight distribution. As such, it is desirable to provide further and preferably improved methods of making non-linear polymers.

It is an object of the present invention to solve the problems associated with the known processes, and to provide a new method for making a non-linear polyolefin.

Accordingly, a first aspect of the present invention provides a method for the production of a non-linear polyolefin, which method comprises:
(a) providing a polyolefin having a ratio of internal to terminal double bonds of at least 1:1 and;
(b) forming a non-linear polyolefin from the polyolefin provided in step (a).

A second aspect of the present invention provides a method for the production of a functionalised polyolefin, which method comprises:
(a) providing a polyolefin having a ratio of internal to terminal double bonds of at least 1:1 and;
(b) forming a functionalised polyolefin from the polyolefin provided in step (a) by performing an addition reaction at one or more of the double bonds.

A third aspect of the present invention provides a method for the production of a polyolefin foam, which method comprises:
(a) providing a polyolefin having a ratio of internal to terminal double bonds of at least 1:1 and;
(b) forming a polyolefin foam from the polyolefin provided in (a).

A fourth aspect of the present invention provides a non -linear polyolefin obtainable according to the method as defined in the first aspect of the present invention.

A fifth aspect of the present invention provides a functionalised polyolefin obtainable by the method as defined above in the second aspect of the present invention.

A sixth aspect of the present invention provides a polyolefin foam obtainable according to the method as defined in the third aspect of the present invention.

A seventh aspect of the present invention provides a polyolefin having a ratio of internal to terminal double bonds of at least 1:1.

An eighth aspect of the present invention provides the use of a polyolefin as defined in the seventh aspect of the present invention for making a non-linear polyolefin, a functionalised polyolefin, or a polyolefin foam as defined in the first, second and third aspects of the present invention.

A ninth aspect of the present invention provides a method for the production of a polyolefin which method comprises a step of:
polymerising an olefin monomer in the presence of a catalyst component having formula (1):

   R''(Cp)(Cp')MQp (1)

   wherein Cp is a cyclopentadienyl group having at least one substituent that is positioned distal to th e bridge; Cp' is an unsubstituted or 3- and/or 6- substituted fluorenyl group; R'' is a structural bridge imparting stereorigidity to the catalyst; M is a metal atom from Group IVB, VB or VIB; and each Q is a hydrocarbyl group having from 1 to 20 carbon at oms and p is the valence of M minus 2;
under polymerising conditions to form a polyolefin, characterised in that the olefin monomer is present at a concentration of less than 3 M/L, and polymerisation is carried out a temperature in the range of from 20 to 90°C so that the formed polyolefin has a ratio of internal to terminal double bonds of at least 1:1.

The polyolefin that is provided in step (a) of the methods according to the first, second and/or third aspects of the present invention advantageously may be as defined in the seventh aspect of the present invention. Further, in one embodiment, the method according to the ninth aspect of the present invention may be used to produce the polyolefin that is provided in step (a) of the methods according to the first, second and/or third aspects of the present invention.

For the purposes of the present invention the term 'non -linear polyolefin' is intended to encompass cross-linked polyolefins as well as polyolefins having long chain branching (LCB). In the context of the present invention, long chain means branches comprising 20 carbon atoms or more. It is preferred that the branches comprise from 20-100,000 carbon atoms, more preferably from 100-100,000 carbon atoms and most preferably from 100-10,000 carbon atoms.

The present invention has arisen from the present inventors studies of the molecular weight of polyolefins produced using a catalyst having formula (1) as set out above. The present inventors measured the molecular weight of the polyolefin products with reference to melt index and also by gel permeation chromatography and by viscosity measurements.

It is known that a high melt index indicates a low molecular weight and that a low melt index indicates a high molecular weight. In the case of the products formed using a catalyst having formula (1), the melt index indicated a high molecular weight. However, surprisingly, gel permeation chromatography measurements indicated a much lower molecular weight. The present inventors now can explain this discrepancy. The high molecular weight indicated by the melt index corresponds to the molecular weight of the polyolefin including a non -linear polyolefin component. The non-linear component is formed as a result of 'cross-links' formed between sites of unsaturation in the polymer chain under the high temperature conditions at which melt index is measured. The non-linear component is formed only because of the high ratio of internal to terminal double bonds in the polyolefin produced using the catalyst of formula (1). This non-linear component is filtered out during gel permeation chromatography measurements so that gel permeation chromatography measures only the molecular weight of the linear component.

The polyolefins having the high ratio of internal to terminal double bonds are hitherto unknown and, thus, form the basis for the present invention. The method according to the first aspect produces polyolefins that advantageously can undergo a variety of subsequent reactions to form further useful products such as non-linear polyolefins and functionalised polyolefins.

The method according to the first aspect produces non-linear polyolefins having desirable mechanical and physical processing capabilities. In particular, the method produces non-linear polyolefins with desirable melt strength and processing capabilities. Further, the method produces non-linear polyolefins having a desirable narrow molecular weight distribution, for example, a molecular weight distribution of up to about 5.

The melt strength of non-linear polyolefins produced according to the first aspect desireably may be at least 1.5 times, or even twice, the melt strength of the corresponding linear polyolefin. For example, the melt strength of the non -linear polyolefins may be ≥ 12, or even ≥ 16.

Preferably, in one embodiment of the first aspect, the non-linear polyolefin is a cross-linked polyolefin. In another embodiment, preferably, the non-linear polyolefin is a polyolefin having LCB. Optionally, the polymer having LCB also is cross-linked.

Where the non-linear polyolefin is a cross-linked polyolefin, it may be vulcanised.

The step of forming the non-linear polyolefin in step (b) in the method according to the first aspect is not especially limited. Because of the chemical reactivity of the internal double bonds of the polyolefin provided in step (a), in step (b), it is possible to create long chain branching and/or cross-linking.

Cross-linking is achievable in step (b) by controlled reticulation of polyolefin chains. This may be contrasted with reticulation by irradiation in the prior art that is uncontrolled. Typically, reticulation will be free -radical induced. Thus, in one embodiment, step (b) preferably comprises a step of initiating cross-linking using a free-radical inducing agent. Cross-linking also may be induced by low dose radiation. This provides the possibility for forming the cross-linked polyolefins according to this invention having improved mechanical and physical properties.

Preferably, the free-radical inducing agent is oxygen or heat.

The conditions under which step (b) is carried out in the method according to the first aspect are not especially limited provided that long chain branch or reticulation (cross-linking) is favoured.

In one embodiment, a polypropylene having a ratio of internal to terminal double bonds of at least 1:1 can be processed in accordance with WO 00/56794, the contents of which are incorporated herein by reference. The polypropylene is mixed with a grafting agent and then irradiated. The grafting agent increases the long chain branching of the propylene molecules as a result of the irradiation. The grafting agent is directly incorporated into the polypropylene molecule during the irradiation step. A particularly preferred grafting agent comprises tetravinylsilane. The accelerating potential or energy of the electron beam is at least 5 MeV, more preferably from 5 to 10 MeV. The power of the electron beam generator is preferably from 50 to 500 Kw. The radiation dose to which to which the propylene/grafting agent mixture is subjected is preferably 5 to 100 kGray.

Where the non-linear polyolefin formed in step (b) is a vulcanised polyolefin, the conditions under which step (b) is carried out must favour vulcanisation. Such conditions are, for instance by reaction with sulphur or other suitable agent under intense heat.

As mentioned above, step (a) may include a step of producing the polyolefin having a ratio of internal to terminal double bonds of at least 1:1. In this regard, this polyolefin may be produced in accordance with any embodiment of the ninth aspect of the present invention as defined above. Polymerising in step (a) can be carried out first under polymerisation conditions, and then step (b) can be carri ed out subsequently under different conditions.

Preferably, step (a) is carried out in a first reaction zone and step (b) is carried out in a second reaction zone. In a preferred embodiment of the present method, the first reaction zone is in series with the second reaction zone.

In the fourth aspect of the present invention, the non-linear polyolefin (which is obtainable by the method according to the first aspect of the present invention) preferably comprises a non-linear polypropylene and/or a non-linear polyethylene.

The non-linear polyolefins according to the fourth aspect of the present invention have increased melt strength. This particular rheological property provides an outstanding processing behaviour which allows the non-linear polyolefins produced in accordance with the invention to be suitable particularly for producing films, sheets, fibres, pipes, foams, hollow articles, panels and coatings. The non -linear polyolefins also have improved mechanical properties, such as flexural modulus and impact resistance.

Preferably, in one embodiment, the non-linear polyolefin is a cross-linked polyolefin, more preferably a vulcanised polyolefin. In another embodiment, the non-linear polyolefin preferably is a polyolefin having long chain branching. Optionally, the polyolefin having long chain branching also is cross-linked.

The method according to the second aspect produces functionalised polyolefins according to the fifth aspect of the present invention. The functionalised polyolefins have new mechanical and physical properties. Functional groups are introduced into the polymer chain by addition reactions across the double bonds.

Desirable functional groups include polar groups such as carboxylic acid groups, acrylic groups, acrylate groups and esters of carboxylic acids. These functional groups facilitate lamination of the polymer chain with other polymers. Thus, these functionalised polyolefins are suitable for use in making paints and for printing and laminating applications.

In one embodiment of the third aspect of the present invention, the polyolefin provided in step (a) may be produced in accordance with the method according to the ninth aspect of the present invention. Preferably, the polyolefin is polypropylene or polyethylene.

Preferably, step (a) in the method according to the third aspect of the present invention, comprises producing a polyolefin having a ratio of internal to terminal double bonds of at least 1:1. In this embodiment, producing the polyolefin in step (a) and forming the polyolefin foam in step (b) may be carried out in separate reaction zones. Preferably, step (a) is carried out in a first reaction zone and step (b) is carried out in a second reaction zone in series with the first reaction zone.

A sixth aspect of the present invention provides a polyolefin foam, obtainable by the method according to the third aspect of the present invention. Preferably, the polyolefin foam is formed from a cross-linked polyolefin. The size and uniformity of bubbles in the formed polyolefin foam are dictated to some extent by the melt strength of the starting material. Therefore, where the polyolefin foam is formed from a crosslinked polyolefin having an improved melt strength (as is obtainable by the first aspect of the present inve ntion), this leads to a polyolefin foam that is light with good mechanical properties.

In the seventh aspect of the present invention, the polyolefin is obtainable by the method according to the ninth aspect of the present invention. Preferably, the poly olefin has more internal double bonds than terminal double bonds. More preferably, the ratio of internal to terminal double bonds is 2:1 or higher, still more preferably 2.5:1 or higher, even more preferably 5:1 or higher, most preferably 6:1 or higher.

Also preferably, the polyolefin is polypropylene or polyethylene. In this regard, the polypropylene or polyethylene may be a homopolymer or copolymer of polypropylene or polyethylene. Homopolypropylene, homopolyethylene and copolymers of ethylene with bu tene and hexene are particularly preferred.

A copolymer of ethylene with hexene will contain more internal double bonds than homopolyethylene.

In the case of polypropylene, all internal double bonds and also all chain end double bonds have been observed to be vinylidene double bonds.

Typically, the polyolefin produced in the method according to the ninth aspect of the present invention is a linear polyolefin.

Preferably, the polyolefin produced in the method according to the ninth aspect is a polypropylene or polyethylene. In this regard, the polypropylene or polyethylene may be a homopolymer or copolymer of polypropylene or polyethylene. Homopolypropylene, homopolyethylene and copolymers of ethylene with butene and hexene are particularly pref erred.

In any embodiment of the method according to the ninth aspect, the polyolefin preferably has more internal double bonds than terminal double bonds. More preferably, the ratio of internal to terminal double bonds is 2:1 or higher, still more preferably 2.5:1 or higher, even more preferably 5:1 or higher, most preferably 6:1 or higher.

The particular metallocene catalyst used in the polymerising step leads to the advantages of the present method. The particular symmetry of the catalyst component can produce a polyolefin having a ratio of internal to terminal double bonds of at least 1:1. This provides an important fraction of the vinyl groups in the backbone of the polymer.

Without wishing to be bound by theory, a discussion of mechanisms for the formation of internal unsaturations in propene polymerisation can be found in 'Organometallics' 2001, 20, 1918-1931.

It can be seen that the mechanism for the formation of internal double bonds can be contrasted with a β -hydrogen elimination or β-alkyl elimination, which results in a terminal double bond.

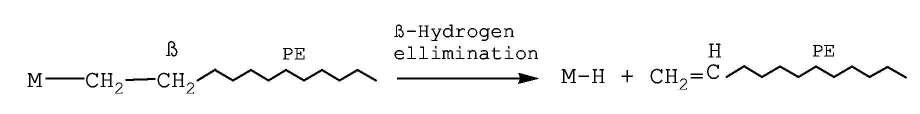

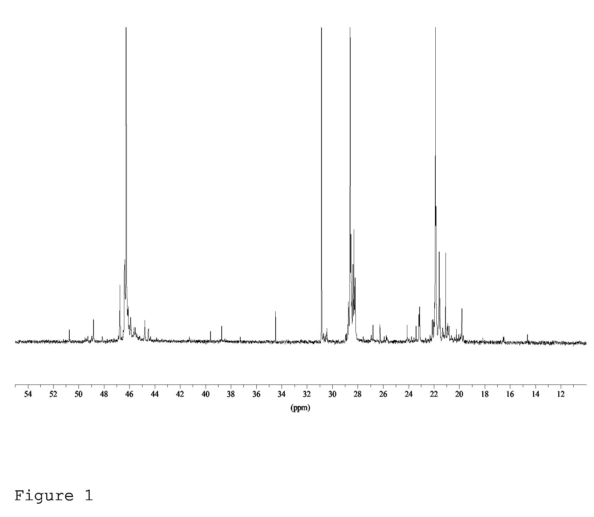

However, with reference to Figure 1 of the cited document, it can be seen that the ratio of internal to terminal double bonds is clearly below 1. This may be derived from "a" which reflects the terminal vinylidenes and "a+d" that reflects the sum of the terminal vinylidenes (one H) and the intern al vinylidenes (two H).

A ratio of internal to terminal double bonds that is lower than 1 can also be observed in Table II of the cited Organometallics publication by summing all terminal double bonds.

ACS Symp. Ser. 2000, 760, 174-93 reports a study on propylene polymerisation with a chiral, C₂-symmetric zirconocene catalyst. The article reports a ¹H NMR analysis of the olefin and saturations in the polymer product. On page 3 lines 3 to 4 it is stated that the allyl end group always prevails over the others. As such, the polymers produced are not in accordance with the present invention where the polymers must have a ratio of internal to terminal double bonds of at least 1:1.

The preferred structure of the catalyst component having formula (1) and in particular the ligands of the catalyst will be discussed in more detail below.

Where present, preferably, each substituent on Cp or Cp' independently comprises a group selected from an aryl having from 1-20 carbon atoms, a hydrocarbyl having from 1 -20 carbon atoms, a cycloalkyl, a silane, an alkoxy and a halogen. More preferred substituents include alkyl, phenyl (Ph), benzyl (Bz), naphthyl (Naph), indenyl (Ind) and benzindenyl (BzInd), silane derivatives (e.g. Me₃Si), alkoxy (preferably R-O, where R is C₁-C₂₀ alkyl), cycloalkyl, and halogen. The most preferred substituents are n-Pr, i-Pr, n-Bu, t-Bu, Me, Et and Me₃Si.

Preferred substituents on Cp' are selected from Me ₃Si, Me, and t-Bu. A particularly preferred substituent on CP' is t-Bu.

The substitution pattern of Cp and Cp' will be determined to some extent by the desired polymer product, for example whether a syndiotactic or isotactic product is desired. In this regard, a C₁ symmetric metallocene is required to make an isotactic polypropylene. Ac cordingly, provided that the metallocene has the desired symmetry, Cp may be mono -, di- or tri- substituted and Cp' may be unsubstituted or mono - or disubstituted.

As mentioned above, Cp has at least one substituent that is positioned distal to the bridge. Any further substituents on Cp may be positioned vicinal or proximal to the bridge. A preferred further substituent on Cp is Me. A particularly preferred distal substituent on Cp is t-Bu.

In one embodiment, preferably, Cp is a monosubstituted cyclopentadienyl group and Cp' is an unsubstituted fluorenyl group.

The metal, M, in the metallocene catalyst typically is Ti, Zr, Hf, or V and preferably Zr. Q is preferably a halogen; typically Cl. Typically the valence of the metal is 4, such that p is 2.

The type of bridge present between the rings in the above-described catalyst is not itself particularly limited. Typically R'' comprises an alkylidene group having 1 to 20 carbon atoms, a germanium group (e.g. a dialkyl germanium group), a silicon group (e.g. a dialkyl silicon group), a siloxane group (e.g. a dialkyl siloxane group), an alkyl phosphine group or an amine group. Preferably, the substituent comprises a silyl radical or a hydrocarbyl radical having at least one carbon atom to form the bridge, such as a substituted or unsubstituted ethylenyl radical (e.g. -CH₂CH₂-). Most preferably R'' is isopropylidene (Me₂C), Ph₂C, ethylenyl, or Me₂Si. It is particularly preferred that the catalyst comprises a Me₂C, Ph₂C, or Me₂Si bridge.

The most preferred catalyst component of the present invention is a catalyst component of formula (1) where Cp' is an unsubstituted fluorenyl group and Cp is a monosubstituted cyclopentadienyl group where the substituent is preferably bulky (e.g. ^{t}Bu) and is positioned distal to the bridge. An example is shown below:

Me₂C(3-^{t}Bu-Cp)(Flu)ZrCl₂

The catalyst system of the present invention is not particularly limited provided that it comprises at least one metallocene catalyst component as defined above. Thus the system may comprise further catalysts, if necessary, such as further metallocene catalysts.

The catalyst system of the present invention typically comprises, in addition to the above catalyst component, one or more activating agents capable of activating the metallo cene catalyst component. Typically, the activating agent comprises an aluminium- or boron- containing activating agent. Boron-containing activating agents are particularly preferred.

Suitable aluminium-containing activating agents comprise an alumoxane, an alkyl aluminium compound and/or a Lewis acid.

The alumoxanes that can be used in the present invention are well known and preferably comprise oligomeric linear and/or cyclic alkyl alumoxanes represented by the formula (A): 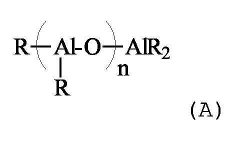 for oligomeric linear alumoxanes; and formula (B) 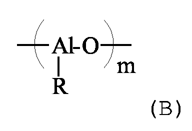 for oligomeric cyclic alumoxanes,
wherein n is 1-40, preferably 10-20; m is 3-40, preferably 3-20; and R is a C₁-C₈ alkyl group, preferably methyl. Generally, in the preparation of alumoxanes from, for example, aluminium trimethyl and water, a mixture of linear and cyclic compounds is obtained.

The amount of alumoxane and metallocene usefully employed in the preparation of a solid support catalyst can vary over a wide range. Generally the aluminium to transition metal mole ratio is in the range between 1:1 and 100:1, preferably in the range 5:1 and 80:1 and more preferably in the range 5:1 and 50:1.

When Q in general formula (1) includes a alkyl group, preferred activating agents include hydroxy isobutylaluminium and metal aluminoxinates. These are particularly, preferred for metallocenes as described in Main Groups Chemistry, 1999, Vol. 3, pg. 53-57; polyhedron 18 (1999) 2211-2218; and Organometallics 2001, 20, 460-467.

Suitable boron-containing activating agents may comprise a triphenylcarbenium boronate, such as tetrakis-pentafluorophenyl-borato-triphenylcarbenium as described in EP-A-0427696: 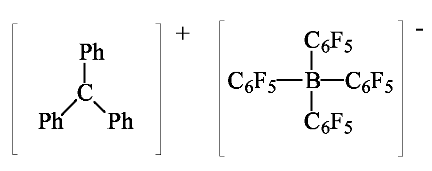 or those of the general formula below, as described in EP-A-0277004 (page 6, line 30 to page 7, line 7):

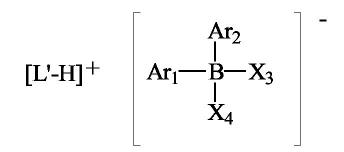

The activating agent preferably is of the type MAO and more preferably it is a boron-based activator. [HMe₂N(C₆H₅)] [B(C₆F₅)₄]/Al(ⁱBu)₃ is most preferred.

The conditions under which the polymerising step is carried out are not especially limited provided that the formation of a polyolefin backbone having a ratio of internal to terminal double bonds of at least 1:1 is favoured.

The monomer is present at a comparatively low concentration in step (a) (i.e. not bulk monomer). Preferably, the monomer is present at a concentration of less than 2 mol/L, even more preferably less than 1 mol/L.

Polymerisation preferably is carried out at a temperature in the range of from 20°C to 100°C, more preferably at a temperature in the range of from 30°C to 90°C, even more preferably at a temperature in the range of from 60 °C to 80°C.

The catalyst system of the present invention may be employed in any polymerisation method such as a slurry polymerisation, a solution polymerisation, or a gas phase polymerisation, provided that the required catalytic activity is not impaired. In a preferred embodiment of the present invention, the catalyst system is employed in a solution polymerisation process, which is homogeneous, or a slurry process, which is heterogeneous.

In a solution process, typical solvents include hydrocarbons having 4-7 carbon atoms such as heptane, toluene or cyclohexane.

Typical polymerisation conditions in a slurry polymerisation include polymerisation at a pressure of from 0.1 -5.6 MPa and a reaction time of from 10 mins to 4 hours. In a slurry process it is necessary to immobilise the catalyst system on an inert support, particularly a porous solid support such as talc, inorganic oxides and resinous support materials such as polyolefin. Preferably, the support material is an inorganic oxide in its finely divided form.

Suitable inorganic oxide materials, which are desirably employed in accordance with this invention, include group IIA, IIIA, IVA, or IVB metal oxides such as silica, alumina and mixtures thereof. Other inorganic oxides that may be employed either alone or in combination with the silica, or alumina are magnesia, titania, zirconia, and the like. Other suitable support materials, however, can be employed, for example, finely divided functionalised polyole fins such as finely divided polyethylene.

Preferably, the support is a silica support having a surface area of from 100-1000 m²/g, more preferably from 200-700 m²/g, and a pore volume of from 0.5-4 ml/g, more preferably from 0.5-3 ml/g.

The order of addition of the catalyst component and activating agent to the support material can vary. In accordance with a preferred embodiment of the present invention, activator dissolved in a suitable inert hydrocarbon solvent is added to the support material slurried in the same or other suitable hydrocarbon liquid and thereafter the catalyst component is added to the slurry.

Preferred solvents include mineral oils and the various hydrocarbons which are liquid at reaction temperature and which do not react with the individual ingredients. Illustrative examples of the useful solvents include the alkanes such as pentane, iso-pentane, hexane, heptane, octane and nonane; cycloalkanes such as cyclopentane and cyclohexane, and aromatics such as benzene, toluene, ethylbenze ne and diethylbenzene.

Preferably the support material is slurried in toluene and the catalyst component and alumoxane are dissolved in toluene prior to addition to the support material.

In one preferred embodiment, the catalyst system is not immobilised on an inert support.

The molecular weight of the polyolefin backbone formed in the method according to the ninth aspect is not especially limited. Typically, the backbone has a medium molecular weight, such as of from 100,000 to 1,000,000. Preferably the molecular weight of the backbone is from 300,000 to 500,000 and most preferably is about 400,000. Advantageously, it has been found that the molecular weight distribution of the polyolefin formed in the method according to the ninth aspect of the present invention has a narrow molecular weight distribution, preferably less than 5, more preferably less than 4, still more preferably of about 2.

The polyolefins produced by the method according to the ninth aspect are not particularly limited provided that t he polyolefin product has a ratio of internal to terminal double bonds of at least 1:1. It is particularly preferred that polyolefin is polyethylene and/or polypropylene.

A tenth aspect of the present invention provides the use of a catalyst having formula (1) as defined in relation to the ninth aspect of the present invention for the preparation of a polyolefin having a ratio of internal to terminal double bonds of at least 1:1 as described above in relation to the seventh aspect of the present invention or for the preparation of a non-linear polyolefin as defined above in relation to the first aspect of the present invention or a functionalised polyolefin as defined above in relation to the second aspect of the present invention or a polyolefin foam as defined in relation to the third aspect of the present invention.

Preferably, in the tenth aspect of the present invention, the polyolefin is polyethylene or polypropylene. More preferably, the non-linear polyolefin is a cross-linked polyolefin or a polyolefin having long chain branching (optionally also cross - linked) as defined above in relation to the fourth aspect of the present invention.

### List of Figures.

Figure 1 represents the 150 MHz ¹³C NMR spectrum of polypropylene sample number 11 of Table 1, prepared with the Me₂C(3-^{*t*}Bu-Cp)(Flu)ZrCl₂/HMe₂N(C₆H₅)][B(C₆F₅)₄]/Al(^{*i*}Bu)₃ catalyst system at a temperature of 70 °C.

Figure 2 represents a possible formation mechanism for internal double bonds.

Figure 3 represents the olefinic region of the 600 MHz ¹H NMR spectrum of the same polypropylene sample number 11 of Table 1 as in Figure 1, wherein v_{d} represents the internal vinylidene, v_{d}, represents the terminal vinylidene and * represents the anti-oxidant.

Figure 4 represents a plot of the viscosity determin ed molecular weight as a function of monomer concentration for polypropylene samples polymerised in the presence of Me₂C(3-^{*t*}Bu-Cp)(Flu)ZrCl₂ and activated with methylalumoxane (MAO), at a temperature of 70 °C.

The invention will now be described in furthe r detail by way of example only, with reference to the following non -limiting specific embodiments.

### Examples.

### Propene homopolymerisation promoted by Me₂C(3-^{t}Bu-Cp)(Flu)ZrCl₂-based catalyst systems.

Propene was polymerised in the presence of Me ₂C(3-^{*t*}Bu-Cp)(Flu)ZrCl₂, activated with either methylalumoxane (MAO) or HMe₂N(C₆H₅)][B(C₆F₅)₄]/Al(^{*i*}Bu)₃, respectively at the temperatures of 30 °C and of 70°C, and at concentrations of propene ([C ₃H₆]) of from 0.3 to 7.5 mol/L. A list of the polymerisation runs is given in Table 1.

**Table 1.**

| Sample | Activating agent | *T* (°C) | [C₃H₆] (mol/L) | [Zr]×10⁵ (mol/L) | [Al]×10² (mol/L) | [B]×10⁵ (mol/L) | *t* (min) | *Y* (g) |
|---|---|---|---|---|---|---|---|---|
| 1 | MAO | 30 | 0.74±0.06 | 2.9 | 3.9 | - | 30 | 6.2 |
| 2 | | | 1.30±0.06 | 1.8 | 3.6 | - | 30 | 7.6 |
| 3 | | | 2.48±0.06 | 0.8 | 3.6 | - | 30 | 7.1 |
| 4 | | | 5.02±0.12 | 0.5 | 3.6 | - | 20 | 8.2 |
| 5 | | | 7.32±0.12 | 1.5 | 3.0 | - | 56 | 33.1 |
| 6 | | 70 | 0.36±0.03 | 4.1 | 3.9 | - | 120 | 0.3 |
| 7 | | | 0.73±0.07 | 3.6 | 4.2 | - | 120 | 1.7 |
| 8 | | | 1.33±0.07 | 4.1 | 4.2 | - | 20 | 6.7 |
| 9 | | | 2.64±0.07 | 2.9 | 4.0 | - | 10 | 6.9 |
| 10 | | | 6.70±0.07 | 4.1 | 2.0 | - | 60 | 4.4 |
| 11 | [HMe₂NPh] [B(C₆F₅)₄]/ Al(^{*i*}Bu)₃ | 70 | 0.63±0.07 | 4.7 | 0.8 | 21 | 120 | 1.4 |
| 12 | | | 1.32±0.07 | 3.4 | 0.8 | 6.5 | 60 | 3.0 |
| 13 | | | 2.77±0.07 | 1.7 | 0.8 | 5.1 | 30 | 3.1 |
| 14 | | | 7.10±0.10 | 3.4 | 1.6 | 11 | 6 | 12.1 |

The ¹³C NMR spectra of all polypropylene samples indicated a predominantly isotactic microstructure typical of site - control.

The ¹³C NMR fraction on *mmmm* pentad (as a semi-quantitative indication of the degree of isotacticity), the mole fraction of stereoirregular monomeric units, *x*_{d} (estimated by statistical analysis of the ¹³C NMR sequence distribution), and the melting temperature and enthalpy, *T*ₘ and Δ*h*ₘ (measured by DSC on the 2^{nd} heating scan) are reported 1n Table 2, for each of the samples listed in Table 1.

**Table 2.**

| Sample | Activating agent | *T*ₚ (°C) | [C₃H₆] (mol/L) | [*mmmm*] | *x*_{d} | *T*ₘ (°C) | Δ*h*ₘ (J/g) | [η] (dL/g) |
|---|---|---|---|---|---|---|---|---|
| 1 | MAO | 30 | 0.74±0.06 | 0.86 | 0.030 | 137.7 | 87 | 0.25 |
| 2 | | | 1.30±0.06 | 0.83 | 0.036 | 135.9 | 80 | 0.41 |
| 3 | | | 2.48±0.06 | 0.83 | 0.036 | 132.9 | 73 | 0.70 |
| 4 | | | 5.02±0.12 | 0.79 | 0.047 | 127.4 | 63 | 1.08 |
| 5 | | | 7.32±0.12 | 0.77 | 0.050 | 125.9 | 67 | 0.95 |
| 6 | | 70 | 0.36±0.03 | 0.75 | 0.055 | 111.7 | 56 | 0.06 |
| 7 | | | 0.73±0.07 | 0.79 | 0.046 | 120.4 | 62 | 0.09 |
| 8 | | | 1.33±0.07 | 0.81 | 0.042 | 125.9 | 77 | 0.14 |
| 9 | | | 2.64±0.07 | 0.81 | 0.042 | 129.4 | 75 | 0.20 |
| 10 | | | 6.70±0.07 | 0.81 | 0.041 | 129.9 | 61 | 0.45 |
| 11 | [HMe₂NPh] [B(C₆F₅)₄]/ Al(^{*i*}Bu)₃ | 70 | 0.63±0.07 | 0.75 | 0.057 | 126/140 | 33 | 0.15 |
| 12 | | | 1.32±0.07 | 0.79 | 0.046 | 124/140 | 40 | 0.17 |
| 13 | | | 2.77±0.07 | 0.81 | 0.041 | 125.2 | 59 | 0.24 |
| 14 | | | 7.10±0.10 | 0.81 | 0.042 | 129.2 | 69 | 0.27 |

The thermal behaviour of the polymers produced is intriguing. Indeed, for samples 11 to 14, the DSC melting endotherms showed two maxima, one of which occurring at the fairly high temperature of about 140°C, and with a relative intensity increasing with decreasing concentration in monomer [C ₃H₆].

As shown in Figure 1, the ¹³C NMR spectra of all polymers (and particularly of those prepared at low monomer concentration) show a plethora of weak peaks in addition to those arising from stereo- and regioirregular units.

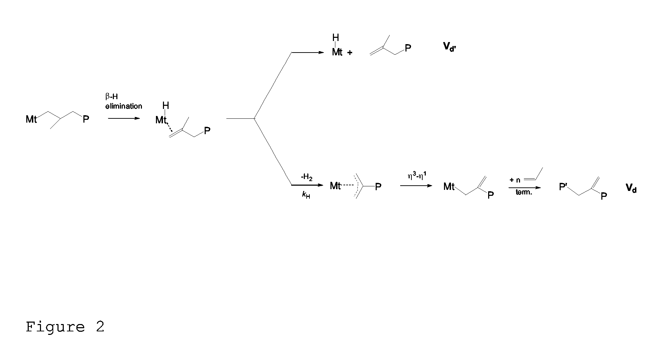

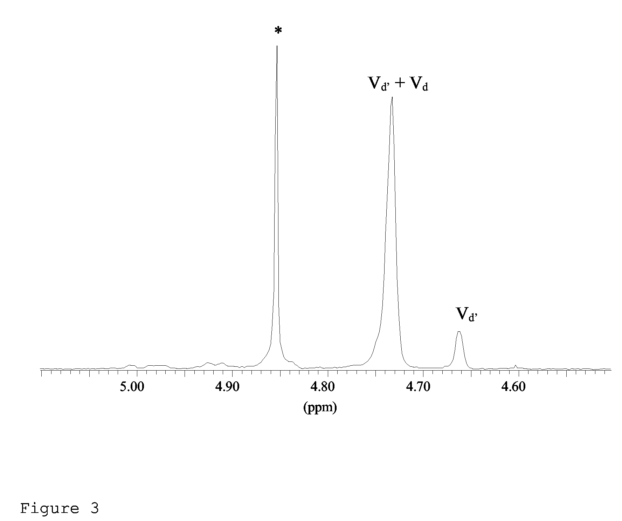

Parts of such peaks are due to chain end -groups. The origin of the remaining ¹³C NMR peaks was revealed by an examination of the olefinic region in the ¹H NMR spectra represented in Figure 3, which shows a comparatively strong resonance at δ = 4.73 ppm, overlapping the lower-field component of the 1:1 "doublet" (δ = 4.66 and 4.73 ppm) of the geminal protons in terminal vinylidenes. This pattern is typical of polypropylene samples containing also "internal" vinylidenes, whose origin is explained in terms of an "allylic" activation of the growing chain as represented in Figure 2.

The results shown in Figure 3 may be contrasted with those shown in Figure 1 of "Organometallics" 2001, 20, 1918 -1931 discussed above. In Figure 3, Vd' reflects the terminal vinylidene and "Vd+Vd'" reflects the sum of the terminal vinylidene and the internal vinylidene. Quite clearly, in Figure 3, the ratio of internal to terminal double bonds is well above 1.

Minor amounts of internal vinylidenes have been detected previously in polypropylenes prepared with a variety of *ansa*-metallocenes, and in special cases (e.g., sterically crowded *rac-C*₂-symmetric *ansa*-zirconocenes, such as *rac*-Me₂C(3-^{*t*}Bu-1-Ind)₂ZrCl₂) they can approach the fraction of terminal ones. However, the ratio between internal and terminal vinylidenes of about 2.5, measured in polypropylene samples prepared according to the present invention at a temperature of 70°C and at low propene concentration with Me₂C(3-^{*t*}Bu-Cp)(Flu)ZrCl₂, preferably activated with [HMe₂N(C₆H₅)] [B (C₆F₅)₄]/Al(^{*i*}Bu)₃, is totally unexpected and unprecedented.

Also notable is the almost complete absence of an y other kind of olefinic unsaturations as seen on Figure 3. The D isotope effect has been measured by comparing the content of unsaturations in samples of poly (propene -*d*₀) and poly(propene-3,3,3-*d*₃) prepared at 70°C with the catalyst system Me ₂C(3-^{*t*}Bu-Cp) (Flu)ZrCl₂/[HMe₂N(C₆H₅)][B(C₆F₅)₄]/Al(^{*i*}Bu)₃ under identical experimental conditions. The ratio between internal and terminal vinylidenes turned out to be higher in poly(propene - *d*₀) and it must be noted that the two samples have practically identical stereoregularity.

Without wishing to be bound by theory, one can speculate that, due to the high steric hindrance at the metal centre of a Me₂C(3-^{*t*}Bu-Cp)(Flu)ZrP⁺ cation, following an intramolecular event of β-H transfer to Zr, double bond rotation and reinsertion into the Zr-H bond with formation of a Zr-C(Me)₂(P)⁺ intermediate is unlikely, and either the terminally unsaturated chain is released, or allylic activation occurs with H₂ evolution and formation of an internal vinylidene as seen on Figure 2.

The mole fractions of terminal and internal vinylidenes, measured by ¹H NMR, in samples of poly(propene-*d*₀) and poly(propene-3,3,3-*d*₃) prepared at 70°C with catalyst system Me₂C (3-^{*t*}Bu-Cp) (Flu) ZrCl₂/ [HMe₂N(C₆H₅)][B(C₆F₅)₄]/Al (^{*i*}Bu)₃ under identical experimental conditions are displayed in Table 3.

**Table 3.**

| | Poly(propene-*d*₀) | Poly(propene-3,3,3-*d*₃) |
|---|---|---|
| terminal vinylidene (mol%) | 1.0 | 1.1 |
| internal vinylidene (mol%) | 2.3 | 1.3 |

It was further observed that when the propene concentration was increased, the mole fractions of both terminal and internal vinylidenes decreased. This behaviour is displayed in Table 4 representing the mole fractions of terminal and internal vinylidenes in polypropylene samples prepared with Me₂C(3-^{*t*}Bu-Cp)(Flu)ZrCl₂/MAO at 70°C, as measured by ¹H NMR.

It is speculated that, for the investigated catalyst, β-H transfer and allylic activation are mainly intramolecular and not monomer-assisted, possibly due to the fact that the bulky ^{*t*}Bu substituent on the Cp ring hinders the formation of sterically demanding activated complexes.

**Table 4.**

| Sample | [C₃H₆] (mol/L) | terminal vinylidene (mol %) | internal vinylidene (mol %) |
|---|---|---|---|
| 6 | 0.36 | 0.65 | 0.53 |
| 9 | 2.64 | 0.26 | 0.19 |

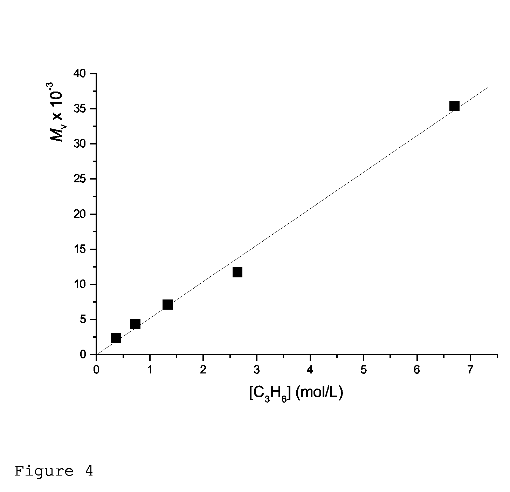

With specific reference to β-H transfer, the above conclusion is consistent with the observed linear dependence of the viscosity determined molecular weight *M*ᵥ on monomer concentration ([C₃H₆]) for the series of polymers prepared with Me₂C(3-^{*t*}Bu-Cp)(Flu)ZrCl₂/MAO at 70°C and displayed in Figure 4. It indicates that the cumulative rate of the active chain transfer pathways is independent of monomer concentration ([C₃H₆]). The viscosity determined molecular weight of the polymer Mᵥ is directly proportional to (viscosity) ⁿ where n is a constant that is characteristic of the polymer.

## Claims

1. A method for the production of a non-linear polyolefin, which method comprises:
(a) providing a polyolefin having a ratio of internal to terminal double bonds of at least 1:1 and;
(b) forming a non-linear polyolefin from the polyolefin provided in step (a).

2. A method for the production of a functionalised polyolefin which method comprises:
(a) providing a polyolefin having a ratio of internal to terminal double bonds of at least 1:1 and;
(b) forming a functionalised polyolefin from the polyolefin provided in step (a) by performing an addition reaction at one or more of the double bonds.

3. A method for making a polyolefin foam comprising the steps of:
(a) providing a polyolefin having a ratio of internal to terminal double bonds of at least 1:1; and
(b) forming a polyolefin foam from the polyolefin produced in step (a).

4. A method according to any one of claims 1 to 3, wherein step (a) comprises a step of producing the polyolefin having a ratio of internal to terminal double bonds of at least 1:1 by polymerising an olefin monomer in the presence of a catalyst component having formula (1):
R''(Cp)(Cp')MQp (1)
wherein Cp is a cyclopentadienyl group having at least one substituent that is positioned distal to the bridge; Cp' is an unsubstituted or 3- and/or 6- substituted fluorenyl group; R'' is a structural bridge imparting stereorigidity to the catalyst; M is a metal atom from Group IVB, VB or VIB; and each Q is a hydrocarbyl group having from 1 to 20 carbon atoms and p is the valance of M minus 2;
under polymerising conditions to form a polyolefin; **characterised in that** the olefin monomer is present at a concentration of less than 3 M/L, and polymerisation is carried out a temperature in the range of from 20 to 90°C so that the formed polyolefin has a rat io of internal to terminal double bonds of at least 1:1.

5. A method according to claim 4, wherein step (a) is carried out in a first reaction zone and step (b) is carried out in a second reaction zone in series with the first reaction zone.

6. A method for the production of a polyolefin, which method comprises a step of:
polymerising an olefin monomer in the presence of a catalyst component having formula (1):
R''(Cp)(Cp')MQp (1)
wherein Cp is a cyclopentadienyl group having at least one substituent that is positioned distal to the bridge; Cp' is an unsubstituted or 3- and/or 6- substituted fluorenyl group; R" is a structural bridge imparting stereorigidity to the catalyst; M is a metal atom from Group IVB, VB or VIB; and each Q is a hydrocarbyl group having from 1 to 20 carbon atoms and p is the valance of M minus 2;
under polymerising conditions to form a polyolefin **characterised in that** the olefin monomer is present at a concentration of less than 3 M/L, and polymerisation is carried out a temperature in the range of from 20 to 90°C so that the formed polyolefin has a ratio of internal to terminal double bonds of at least 1:1.

7. A method according to any one of claims 4 to 6, wherein Cp has a further substituent.

8. A method according to any on e of claims 4 to 7, wherein the distal substituent on Cp is selected from n -Pr, i-Pr, n-Bu, t-Bu, Me₃Si, Me and Et.

9. A method according to any of claims 4 to 8, wherein M is Ti, Zr, Hf, or V.

10. A method according to any one of claims 4 to 9, wherein Cp' has at least one substituent selected from Me ₃Si, Me, and t-Bu.

11. A method according to any one of claims 4 to 10, wherein the catalyst component is activated by a boron-containing activating agent.

12. A method according to any one of claims 4 to 11, wherein the olefin monomer comprises ethylene or propylene.

13. A non-linear polyolefin obtainable according to the method as defined in claim 1.

14. A non-linear polyolefin according to claim 13, wherein the non-linear polyolefin is a polyolefin having long chain branching.

15. A non-linear polyolefin according to claim 13 or claim 14, wherein the non-linear polyolefin is a cross-linked polyolefin.

16. A functionalised polyolefin obtainable according to the method as defined in claim 2.

17. A polyolefin foam obtainable according to the method as defined in claim 3.

18. A polyolefin having a ratio of internal to terminal double bonds of at least 1:1.

19. A polyolefin according to claim 18, wherein the polyolefin is a homopolymer or a copolymer of propylene or ethylene.

20. A polyolefin according to claim 19, wherein the polyolefin is homopolypropylene and where all double bonds are vinylidene double bonds.
